# EUROPÄISCHE PATENTSCHRIFT

(11) **EP 1 000 198 B1**
(45) Veröffentlichungstag und Bekanntmachung des Hinweises auf die Patenterteilung: **07.08.2002**
(21) Anmeldenummer: 98913610.6
(22) Anmeldetag: 28.02.1998
(51) Int. Cl.: D21H 13/38

(54) **VERFAHREN ZUM HERSTELLEN VON HOCHTEMPERATURBESTÄNDIGEM TECHNISCHEM PAPIER UND DANACH HERGESTELLTES PAPIER**
METHOD FOR PRODUCING HIGH-TEMPERATURE RESISTANT TECHNICAL PAPER AND PAPER PRODUCED ACCORDING TO SAID METHOD
PROCEDE DE PRODUCTION DE PAPIER TECHNIQUE A HAUTE RESISTANCE THERMIQUE ET PAPIER PRODUIT SELON LEDIT PROCEDE

(30) Priorität: 07.03.1997 DE 19709288
(43) Veröffentlichungstag der Anmeldung: 17.05.2000
(73) Patentinhaber: Culimeta - Alfons Cuylits - Gesellschaft Für Textilglas Technologie M.B.H. & Co. KG, 49593 Bersenbrück (DE)
(72) Erfinder: BECKER, Uwe, D-49626 Bippen (DE)
(74) Vertreter: Gille Hrabal Struck Neidlein Prop Roos
(86) Internationale Anmeldenummer: EP9801140
(87) Internationale Veröffentlichungsnummer: WO9840557

(56) Entgegenhaltungen:
- PATENT ABSTRACTS OF JAPAN vol. 007, no. 085 (M-206), 8.April 1983 & JP 58 011397 A (SANYO DENKI KK;OTHERS: 01), 22.Januar 1983,

## Beschreibung

Die Erfindung betrifft ein Verfahren zum Herstellen von hochtemperaturbeständigem technischen Papier, bei dem mit einer nassen Papierstoff-Pulpe als Verstärkungselemente dienende Fasern vermischt werden und sodann aus der Pulpe durch Entwässern der Pulpe und ein sich dadurch ergebendes Verdichten des Papierstoffes technisches Papier hergestellt wird. Außerdem betrifft die Erfindung ein hochtemperaturbeständiges technisches Papier, das nach diesem Verfahren hergestellt ist.

Hochtemperaturbeständige technische Papiere werden beispielsweise in Dicken bzw Stärken von 0,5 bis 5 mm hergestellt. Die Herstellung hochtemperaturbeständiger technischer Papiere ist der Herstellung von üblichen Papieren ähnlich, d. h. die technischen Papiere werden ebenso wie andere Papiere aus einer nassen Papierstoff-Pulpe durch Entwässern der Pulpe und dadurch erfolgendes Verdichten des Papierstoff-Fasermaterials erzeugt.

Es ist bekannt, hochtemperaturbeständige Papiere für technische Zwecke herzustellen, die als Verstärkungsmittel Keramikfasern enthalten. Derartige, zur thermischen Isolation bis 1.000° C eingesetzte keramische Papiere weisen jedoch den Nachteil auf, daß sie unter Betriebsbedingungen verhältnismäßig stark schrumpfen, nämlich beispielsweise von 2 bis 4 %. Außerdem besteht bei diesen bekannten keramischen Papieren das Problem, daß die hierfür verwendeten Keramikfasern keinen definierten Durchmesser aufweisen, dieser aber in der Regel unter 3 µm liegt, so daß die Fasern dieser keramischen Papiere lungengängig sind und als gesundheitlich bedenklich gelten.

Der Erfindung liegt die Aufgabe zugrunde, ein hochtemperaturbeständiges technisches Papier zu schaffen, das beispielsweise für thermische Isolierzwecke verwendet werden kann und das eine verbesserte Formbeständigkeit aufweist, so daß es sich im praktischen Betrieb nicht ungünstig verändert und insbesondere seine Gestalt und Abmessung nicht in ungünstiger Weise verändert.

Diese Aufgabe wird erfindungsgemäß mit einem Verfahren gemäß Anspruch 1 gelöst. Vorteilhafte Ausgestaltungen dieses Verfahrens sind Gegenstand der von Anspruch 1 abhängigen Ansprüche 2 bis 4.

Außerdem wird diese Aufgabe erfindungsgemäß mit einem hochtemperaturbeständigen technischen Papier gelöst, welches die Merkma le des Anspruches 5 aufweist. Vorteilhafte Ausgestaltungen dieses technischen Papieres sind Gegenstand der vom Anspruch 5 abhängigen Unteransprüche 6 bis 9.

Gemäß der vorliegenden Erfindung werden zum Herstellen hochtemperaturbeständiger technischer Papiere zunächst geschnittene und sodann durch thermische Behandlung geschrumpfte Fasern beim Papierhersteller der nassen Papierstoff-Pulpe zugeführt, aus der ein mit organischen Bindemitteln wie beispielsweise Acrylaten versehenes Papier hergestellt wird.

Die erfindungsgemäß bei der Herstellung hochtemperaturbeständiger Papiere verwendeten, thermisch vorgeschrumpften Silikafasern haben einen durchschnittlichen Durchmesser von 6 µm, d. h. sie sind nicht lungengängig. Bei den bisher für derartige Zwecke verwendeten Keramikfasern für hochtemperaturbeständige Keramikpapiere ist dies nicht der Fall, denn diese Keramikfasern haben keinen definierten Durchmesser, jedoch liegt dieser Durchmesser in der Regel unter 3 mkm. Derartige Fasern sind aber lungengängig und gelten dementsprechend als gesundheitlich bedenklich.

Bekannte keramische technische Papiere werden zur thermischen Isolation bis zu 1.000° C eingesetzt. Bei derartigen Temperaturen schrumpfen die bekannten keramischen Papiere um 2 bis 4 %. Da gemäß der vorliegenden Erfindung bei der Herstellung der technischen Papiere zuvor geschrumpfte Fasern und insbesondere Silikafasern dem Papiermaterial zugeführt werden, weist das erfindungsgemäß hergestellte technische Papier einen thermisch bedingten Schrumpf von weniger als 1 % auf.

Ein weiterer Vorteil von vorgeschrumpfte Silikafasern enthaltenden technischen Papieren besteht darin, daß diese keine Shottanteile enthalten, da sie im kontinuierlichen Ziehverfahren hergestellt werden. Diese technischen Papierfasern sind daher sehr vibrationsbeständig.

Die erfindungsgemäß eingesetzten Silikafasern haben vorzugsweise eine chemische Zusammensetzung von 80 bis 99,98 % SiO₂.

Außerdem weisen erfindungsgemäß hergestellte und erfindungsgemäß ausgebildete technische Papiere vorzugsweise ein Flächengewicht von 10 bis etwa 400 g/m² auf.

## Patentansprüche

1. Verfahren zum Herstellen von hochtemperaturbeständigem technischen Papier, bei dem mit einer nassen Papierstoff-Pulpe Fasern vermischt werden und sodann aus der Pulpe technisches Papier durch Entwässern der Pulpe und ein dadurch bedingtes Verdichten des Papierstoffes hergestellt wird,
**dadurch gekennzeichnet,**
**daß** als Fasern geschnittene und zuvor thermisch geschrumpfte Fasern der nassen Pulpe zugegeben werden.

2. Verfahren nach Anspruch 1, **dadurch gekennzeichnet, daß** als Fasern geschnittene thermisch geschrumpfte Silikafasern der nassen Pulpe zugegeben und mit dieser vor der Herstellung des technischen Papiers vermischt werden.

3. Verfahren nach Anspruch 2, **dadurch gekennzeichnet, daß** die Silika-Fasern zu 80 bis 99,98 % aus SiO₂ bestehen.

4. Verfahren nach einem der Ansprüche 1 bis 3, **dadurch gekennzeichnet, daß** technische Papiere mit einem Flächengewicht von 10 bis etwa 400 g/m² hergestellt werden.

5. Hochtemperaturbeständiges technisches Papier hergestellt nach dem Verfahren gemäß einem der Ansprüche 1 bis 4.

6. Papier nach Anspruch 5, **dadurch gekennzeichnet, daß** es eine Dicke von 0,5 bis 5 mm aufweist.

7. Papier nach Anspruch 5 oder 6, **dadurch gekennzeichnet, daß** die Silikafasern einen durchschnittlichen Durchmesser von 6 µm aufweisen.

8. Papier nach einem der Ansprüche 5 bis 7, **dadurch gekennzeichnet, daß** es im Naßverfahren mit organischen Bindemitteln hergestellt ist.

9. Papier nach Anspruch 8, **dadurch gekennzeichnet, daß** das organische Bindemittel ein Acrylat ist.

## Claims

1. Method for producing high-temperature resistant technical paper in which fibres are mixed with a wet paper fabric pulp and subsequently a technical paper is produced from said pulp by dehydrating said pulp and producing a densification of the paper fabric conditioned thereby,
**characterized in that**
the fibres added to the wet pulp are cut fibres which have been previously thermally contracted.

2. Method as defined by claim 1,
**characterized in that**
the fibres added to the wet pulp are thermally contracted cut silica fibres which are mixed with the latter before the production of the technical paper.

3. Method as defined by claim 2,
**characterized in that**
said silica fibres consist of SiO₂ present in an amount of about 80 to 99,98 %.

4. Method as defined by either of claims 1 to 3,
**characterized in that**
the technical papers are produced with a gsm substance of about 10 to 400 g/m².

5. High-temperature resistant technical paper produced according to either of claims 1 to 4.

6. Technical paper according to claim 5,
**characterized in that**
said paper presents a thickness of about 0.5 to 5 mm.

7. Technical paper according to either of claims 5 or 6,
**characterized in that**
the silica fibres have an average diameter of 6 µm.

8. Technical paper according to either of claims 5 to 7,
**characterized in that**
said paper is produced by means of a wet process including organic binders.

9. Technical paper according to claim 8,
**characterized in that**
said organic binder is an acrylate.

## Revendications

1. Procédé de production de papier technique à haute résistance thermique dans lequel des fibres sont mélangées avec une pâte à papier humide et ce papier technique est ensuite produit à partir de cette pâte à papie par déhydration de ladite pâte et la condensation de cette pâte à papier conditionnée par cette déhydration,
**caractérisé en ce que**
les fibres ajoutées à la pâte à papier humide sont des fibres coupées et préalablement contractées par voie thermique.

2. Procédé suivant la revendication 1,
**caractérisé en ce que**
les fibres ajoutées à la pâte à papier humide sont des fibres silica thermiquement contractées et mélangées à la pâte à papier avant la production dudit papier technique.

3. Procédé suivant la revendication 2,
**caractérisé en ce que**
les fibres silica consistent à 80 et 99,98 % de SiO₂.

4. Procédé suivant l'une des revendications 1 à 3,
**caractérisé en ce que**
les papiers techniques sont produits avec un grammage de 10 à environ 400 g/m².

5. Papier technique à haute résistance thermique suivant l'une des revendications 1 à 4.

6. Papier technique suivant la revendication 5,
**caractérisè en ce que**
ce papier a une épaisseur variant entre 0,5 et 5 mm.

7. Papier technique suivant l'une des revendications 5 ou 6,
**caractérisè en ce que**
les fibres silica ont un diamètre moyen de 6 µm.

8. Papier technique suivant l'une des revendications 5 à 7,
**caractérisè en ce que**
ce papier est produit au moyen d'un procédé par voie humide avec des liants organiques.

9. Papier technique suivant la revendication 8,
**caractérisé en ce que**
le liant organique est un acrylate.
